# EUROPEAN PATENT SPECIFICATION

(11) **EP 2 429 276 B1**
(45) Date of publication and mention of the grant of the patent: **27.03.2013**
(21) Application number: 09779383.0
(22) Date of filing: 29.04.2009
(51) Int. Cl.: A01B 71/04

(54) **A SEALED HUB-BEARING ASSEMBLY FOR AGRICULTURAL APPLICATIONS**
ABGEDICHTETE RADLAGERANORDNUNG FÜR LANDWIRTSCHAFTLICHE ANWENDUNGEN
ENSEMBLE ROULEMENT DE MOYEU ÉTANCHE POUR APPLICATIONS AGRICOLES

(43) Date of publication of application: 21.03.2012
(73) Proprietor: Aktiebolaget SKF, 415 50 Göteborg (SE)
(72) Inventor: MORERO, Luca, 10064 Pinerolo (Torino) (IT); PICATTO, Fabio, 10137 Torino (IT); ANDERSSON, Ove, Lennart, 441 96 Alingsås (SE); URSO, Stefano, 10123 Torino (IT); MARIVO, Massimo, 10060 Airasca (Torino) (IT); MALDERA, Carlo, 10094 Giaveno (Torino) (IT); PANCHETTI, Marco, 10146 Torino (IT); MAGNETTO, Andrea, 10127 Torino (IT)
(74) Representative: Fioravanti, Corrado
(86) International application number: PCT/EP2009/055203
(87) International publication number: WO 2010/124731

(56) References cited:
- WO-A2-2007/105185
- DE-A1- 4 431 277
- DE-U1- 20 012 666
- FR-A1- 2 882 620
- US-A- 3 397 933
- US-A- 4 249 782

## Description

The present invention refers to a sealed hub-bearing assembly for agricultural applications.

For a better understanding of the state of the art and problems related thereto, there will be at first described a hub-bearing assembly for agricultural applications known from WO 2007/105185, shown in figure 1 of the appended drawings. The known hub-bearing unit comprise a radially outer, rotatable outer ring 11 from one side of which a flange 12 radially extends and pair of identical, symmetrically arranged inner bearing rings 16, 17 are tightly mounted side to side on the axle A projecting from an arm E of the frame of an agricultural machine. In order to prevent contaminants (water, mud, soil) from entering the bearing from the side near the arm of the frame, the bearing unit is equipped with a sealing device 20. The sealing device is fitted between an outer collar 34 secured to the outer ring 11 and an inner L-shaped side shield 39 which is fitted around the axle A and axially clamped against the frame E.

DE 200 12 666 U1 discloses a hub-bearing assembly as defined in the preamble of claim 1. Another hub-bearing assembly for agricultural uses is known from DE 44 31 277 A1.

It is an object of the invention to provide an arrangement for mounting the sealing device to the bearing unit, thereby allowing them to be handled and shipped together as a single piece. Furthermore, it is desirable to allow a component to be dispensed with, while not increasing the axial size of the inner bearing rings. Particularly, the axial dimension of the inner bearing rings must not be increased. These rings must be identical for manufacturing reasons, symmetrical in order to assure proper balancing of the bearing.

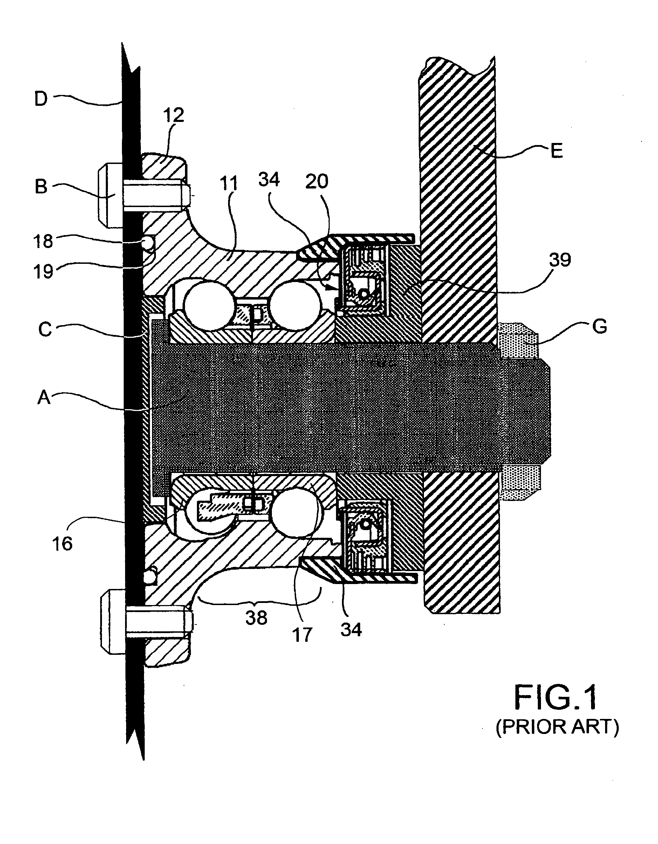

It is also desirable to improve the effectiveness of the sealing device, particularly by preventing water from leaking into the bearing along a path which, in the conventional design of figure 1, is defined between the frame arm E, the axle A and the side shield 39. Efficient sealing action is essential for a correct and reliable operation of the disc over an acceptable period of time. Since the contamination conditions are extreme, contaminants entering the inner parts of the bearing will rapidly cause the disc to lock, reducing productivity of the agricultural machine.

The present invention is directed at providing such improvements over existing bearing designs for agricultural applications. The above and other objects and advantages, which will be better understood in the following, are achieved according to the invention by a hub-bearing assembly having the features defined in claim 1. Preferred embodiments of the invention are set forth in the dependent claims.

Preferred, but not limiting embodiments of the invention will now be described, reference being made to the appended drawings, in which:
- fig. 1 is an axial cross-sectional view of a hub-bearing assembly of known design, which rotatably supports a soil working disc on an axle projecting from an arm of an agricultural machine;
- fig. 2 is an axial cross-sectional view of an illustrative embodiment of a sealed hub-bearing assembly according to the invention;
- fig. 3 is a fragmentary, enlarged view of a detail of fig. 2;
- fig. 4 is a partial, axial cross sectional view of the sealed hub-bearing assembly of fig. 1 mounted on an agricultural axle; and
- fig. 5 is an enlarged view, with some parts removed for reasons of clarity, of an optional element of the sealed hub-bearing assembly of fig. 2.

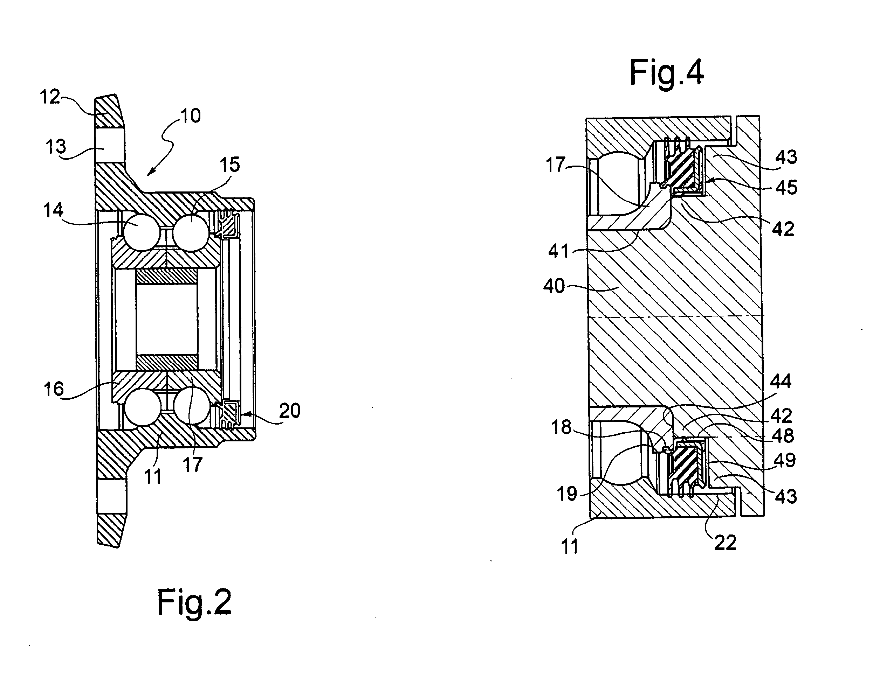

In the text below, the structure of the hub-bearing assembly will be described only to such an extent as is necessary for the understanding of the invention. Referring now to fig. 2, a sealed hub-bearing assembly for agricultural applications comprises a hub-bearing unit, indicated overall at 10, and an associated sealing device 20.

The hub-bearing unit 10 comprises:
- a rotatable outer ring 11 forming on one side a radial flange 12 on the opposite side a cylindrical seat 13;
- a pair of inner stationary rings 16, 17 which are able to be tightly mounted side to side on a central axle 40, partly shown in fig. 4, projecting from the frame (not shown) of an agricultural machine; and
- a dual set of bearing balls 14, 15 which are interposed between the outer ring 11 and the stationary rings 16, 17.

The sealing device 20 is fitted within the seat 13. As shown more clearly in fig. 4, it is attached to one of the inner bearing rings 17, namely the inner ring fitted towards the proximal part of the axle 40. In this context, the term "proximal" denotes an axially inner location that in use will be near the supporting arm of the frame, whereas "distal" indicates an axially outer location towards that end of the axle which is near the tilling disc.

The axle 40 is formed with a cylindrical portion 41 on which the inner bearing rings 16, 17 are inserted, and two annular steps 42, 43. The first annular step 42, of smaller diameter, defines a radial shoulder 44 against which the inner bearing rings are axially clamped. The second annular step, of larger diameter, defines an annular seat 45 for the sealing device 20.

The sealing device 20 includes a resilient annular gasket 32 of elastomeric or rubber-like material, and an annular metal stiffening insert 28 which has a substantially L-shaped axial cross section and supports the gasket 32. The insert 28 has a cylindrical portion 28a which is coaxial to an axis x of rotation of the hub-bearing unit 10 and a flanged portion 28b which is integral with the portion 28a and is perpendicular to the axis x from which it extends towards the periphery of the sealing device 20.

The gasket 32 is provided with an annular bulge or protrusion 34 and with a set of parallel, radially outwardly extending lips 33 (three in the illustrated example) that are arranged to slide against the inner cylindrical wall 22 of the outer bearing ring 11, thereby sealingly bridging the annular space between the inner ring 17 and the outer ring 11. All the lips 33 are outer radially bounded by a common cylindrical surface 33s in sliding contact with the seat 13, and have three different radial lengths: the shortest lip 33a is placed nearby the portion 28b and the longest lip 33c is placed axially far from the portion 28b and is provided with a flat annular surface 33d substantially parallel to the portion 28b. It should be noted that in the appended drawings the gasket 32 is depicted in its non-deformed condition.

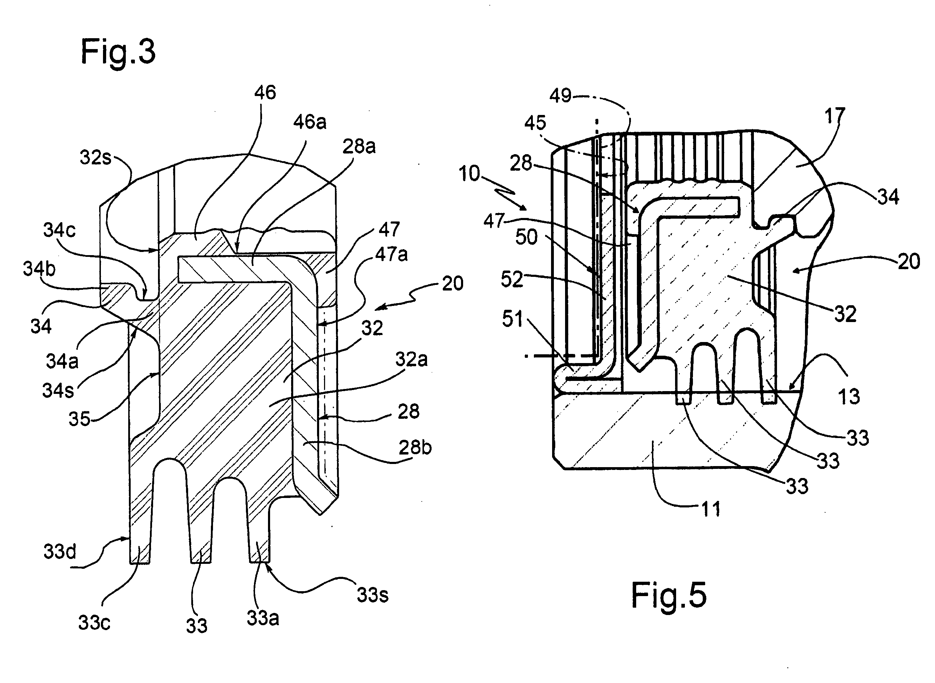

As best seen in figs. 3 and 4, the gasket 32 comprises a body 32a which is axially delimited by a surface 32s and is integrally coupled with the insert 28. The surface 32s is parallel to the portion 28b and faces the hub-bearing unit 10 in its assembled position. The protrusion 34 extends in a somewhat conical direction from the surface 32s and comprises a root portion 34a which is tapered starting form the surface 32s and a distal finger 34b which forms with the surface 32s an annular undercut 34c. The root portion 34a and the distal finger 34b are both bounded by an external conical surface 34s which joins the surface 32s and defines together with the surface 32s and the surface 33d an annular cavity 35 the function of which is also to keep the lubricating grease within the hub-bearing unit 10.

The protrusion 34 extends from the axially outer and radially inner part of the body 32a and is close to the portion 28a so that it can exploit the stiffness that the portion 28a gives the body 32a in that area in order to ensure a stable connection with the inner ring 17.

The protrusion 34 is snap-fitted into the circumferential groove 18 in order to mount the sealing device 20 onto the hub-bearing unit 10 and in order to make the surface 32s to be adherent to the side surface of the inner ring 17 and to allow the inner ring 17 to be inserted in the undercut 34c.

The sealing device 20 furthermore comprises resilient coating portions 46 and 47 which are coupled respectively with the portion 28a and the portion 28b to be pressed against the cylindrical 48 and, in some circumstances, also against the radial 49 sides of the annular seat 45.

The coating portions 46 and 47 are provided with a number of slots 46a and 47b to improve elasticity of the same coating portions 46 and 47 and continuously surround the axle 40, providing static sealing action around the axle and interrupting any leakage path towards the inner parts of the bearing unit. The slots 46a are circumferentially spaced from each other and are parallel to the axis x, while the slots 47a are perpendicular to the axis x and are also separated by the relevant slots 46a.

Fig. 5 shows a preferred embodiment of the sealed hub-bearing unit 10 wherein the sealing device 20 further includes an annular disc 50 which is preferably made of sheet steel and is placed axially in front of but not in contact with the annular gasket 32 in order to define a labyrinth seal.

The disc 50 comprises a fixing portion 51 which is defined by a folded annular metal sheet and it is suitable to be mounted in the seat 13, and a flange 52, which is integral with the fixing portion 51 facing the coating portion 47 and which has an inner diameter the dimensions of which are greater than the dimensions of an inner diameter of the coating portion 46. The steel labyrinth 50 has a double function: firstly, it improves the overall sealing performance of the sealing device 20 by providing an additional labyrinth sealing action; secondly, it keep the annular gasket 32 in its operative configuration while the sealed hub-bearing unit 10 has to be dismounted from the axle 40. The fixing portion 51 is suitable to occupy the gap between the cylindrical wall 22 and the annular step 43, and the flange 52 is suitable to occupy the gap between the coating portion 47 and radial 49 sides of the annular seat 45 without being in touch neither with the former nor the latter.

It will be appreciated that, by virtue of the above arrangement, the sealing device may be handled with the bearing unit. The axial size of the bearing assembly is kept very compact. Particularly, the inner rings need not be extended in order to provide a supporting surface for the sealing device. A conventional component, the side shield 39, is dispensed with. Improved, watertight sealing action is provided between the bearing unit and its supporting axle.

## Claims

1. A sealed hub-bearing assembly for agricultural applications, the assembly comprising:
a hub-bearing unit (10) with a radially outer, rotatable outer ring (11) from one side of which a flange (12) radially extends, and pair of radially inner stationary rings (16, 17) tightly mounted side to side;
a sealing device (20) mounted on a side of the hub-bearing unit (10) opposite to the side of the flange (12), the sealing device (20) including a stationary resilient annular sealing gasket (32) arranged to slide against an inner cylindrical wall (22) rotating with the outer bearing ring (11), thereby sealingly bridging the annular space between the inner and outer bearing rings, wherein the resilient gasket (32) is mounted to the radially inner ring (17) located farthest from the side of the flange (12),
**characterised in that** the resilient gasket (32) comprises an annular protrusion (34) mounted by snap-action in a circumferential groove (18) formed **in that** inner bearing ring (17).

2. The sealed hub-bearing assembly of claim 1, **characterised in that** the groove (18) is formed in a radially outer surface (19) of the inner bearing ring (17).

3. The sealed hub-bearing assembly of claim 1 or 2, **characterised in that** the protrusion (34) is an annular bulge.

4. The sealed hub-bearing assembly of claim 1 or 2 or 3, **characterised in that** the protrusion (34) extends in a conical direction from an axially outer and radially inner part of the gasket (32).

5. The sealed hub-bearing assembly of any one of the preceding claims, **characterised in that** the gasket (32) further comprises
at least one radially outwardly extending lip (33) arranged to slide against said inner cylindrical wall (22), and
at least one resilient portion (46, 47) formed on at least one of a radially inner side and an axially outer side of the gasket.

6. A sealed hub-bearing assembly as claimed in claim 5, **characterized by** further comprising three radially outwardly extending lips (33) which are radially bounded on the outside by a common cylindrical surface (33s) in sliding contact with said inner cylindrical wall (22), and which have three different radial lengths.

7. A sealed hub-bearing assembly as claimed in any one of the preceding claims, **characterized in that** the sealing device (20) comprises a labyrinth seal (50) which is axially placed in front of the annular gasket (32) and which is mounted in the inner cylindrical wall (22).

8. A sealed hub-bearing assembly as claimed in claim 7, **characterized in that** the labyrinth seal (50) comprises a folded fixing element (51) mounted in the inner cylindrical wall (22) and a flange (52), which is integral with the fixing element (51) and faces the annular gasket (32).

## Patentansprüche

1. Abgedichtete Nabenlageranordnung für landwirtschaftliche Anwendungen, wobei die Anordnung Folgendes umfasst:
eine Nabenlagereinheit (10) mit einem radial äußeren, drehbaren Außenring (11), von dessen einer Seite sich ein Flansch (12) radial erstreckt, und einem Paar radial innerer stationärer Ringe (16, 17), die fest nebeneinander angebracht sind;
eine Dichtungsvorrichtung (20), die auf einer Seite der Nabenlageranordnung (10) gegenüber der Seite des Flansches (12) angebracht ist, wobei die Dichtungsvorrichtung (20) eine stationäre elastische ringförmige Dichtung (32), die zum Gleiten gegen eine zylindrische Innenwand (22), die sich mit dem Lageraußenring (11) dreht, ausgelegt ist, enthält, wodurch sie den Ringraum zwischen dem Lagerinnenring und dem Lageraußenring dichtend überbrückt, wobei die elastische Dichtung (32) an dem radial inneren Ring (17) angebracht ist, der am weitesten von der Seite des Flansches (12) entfernt angeordnet ist,
**dadurch gekennzeichnet, dass** die elastische Dichtung (32) einen ringförmigen Vorsprung (34) umfasst, der durch Einrastwirkung in einer Umfangsnut (18), die in dem Lagerinnenring (17) ausgebildet ist, angebracht ist.

2. Abgedichtete Nabenlageranordnung nach Anspruch 1, **dadurch gekennzeichnet, dass** die Nut (18) in einer radial äußeren Fläche (19) des Lagerinnenrings (17) ausgebildet ist.

3. Abgedichtete Nabenlageranordnung nach Anspruch 1 oder 2, **dadurch gekennzeichnet, dass** der Vorsprung (34) eine ringförmige Ausbuchtung ist.

4. Abgedichtete Nabenlageranordnung nach Anspruch 1 oder 2 oder 3, **dadurch gekennzeichnet, dass** sich der Vorsprung (34) in einer konischen Richtung von einem axial äußeren und radial inneren Teil der Dichtung (32) erstreckt.

5. Abgedichtete Nabenlageranordnung nach einem der vorhergehenden Ansprüche, **dadurch gekennzeichnet, dass** die Dichtung (32) ferner
mindestens eine sich radial nach außen erstreckende Lippe (33), die zum Gleiten gegen die zylindrische Innenwand (22) ausgelegt ist, und
mindestens einen elastischen Abschnitt (46, 47), der auf einer radial inneren Seite und/oder einer axial äußeren Seite der Dichtung ausgebildet ist,
umfasst.

6. Abgedichtete Nabenlageranordnung nach Anspruch 5, **dadurch gekennzeichnet, dass** sie ferner drei sich radial nach außen erstreckende Lippen (33) umfasst, die radial außen durch eine gemeinsame zylindrische Fläche (33s) in Gleitkontakt mit der zylindrischen Innenwand (22) begrenzt sind und drei verschiedene radiale Längen aufweisen.

7. Abgedichtete Nabenlageranordnung nach einem der vorhergehenden Ansprüche, **dadurch gekennzeichnet, dass** die Dichtungsvorrichtung (20) eine Labyrinthdichtung (50) umfasst, die axial vor der ringförmigen Dichtung (32) platziert und in der zylindrischen Innenwand (22) angebracht ist.

8. Abgedichtete Nabenlageranordnung nach Anspruch 7, **dadurch gekennzeichnet, dass** die Labyrinthdichtung (50) ein gefaltetes Befestigungselement (51), das in der zylindrischen Innenwand (22) angebracht ist, und einen Flansch (52), der mit dem Befestigungselement (51) integral ist und zur ringförmigen Dichtung (32) weist, umfasst.

## Revendications

1. Ensemble roulement de moyeu étanche pour applications agricoles, l'ensemble comprenant :
une unité de roulement de moyeu (10) avec une bague extérieure (11) pouvant tourner placée à l'extérieur dans le plan radial, un flasque (12) ressortant de ladite unité dans le plan radial ainsi qu'une paire de bagues (16, 17) stationnaires placées à l'intérieur dans le plan radial fixées fermement face à face ;
un dispositif d'étanchéité (20) fixé sur un côté de l'unité de roulement de moyeu (10) opposé au côté du flasque (12), le dispositif d'étanchéité (20) comprenant une garniture d'étanchéité (32) élastique stationnaire agencée pour coulisser contre une paroi cylindrique intérieure (22) pivotant avec la bague de roulement extérieure (11), compensant ainsi de façon étanche l'espace annulaire prévu entre les bagues de roulement extérieure et intérieure, la garniture élastique (32) étant fixée à la bague (17) située à l'intérieur dans le plan radial et positionnée le plus loin du flasque (12) ;
**caractérisé en ce que** la garniture élastique (32) comprend une saillie annulaire (34) fixée par clipsage dans une rainure circonférentielle (18) formée dans ladite bague de roulement (17) intérieure.

2. Ensemble roulement de moyeu étanche selon la revendication 1, **caractérisé en ce que** la rainure (18) est formée dans une surface extérieure (19) dans le plan radial de la bague de roulement (17) intérieure.

3. Ensemble roulement de moyeu étanche selon la revendication 1 ou 2, **caractérisé en ce que** la saillie (34) est un renflement annulaire.

4. Ensemble roulement de moyeu étanche selon la revendication 1 ou 2 ou 3, **caractérisé en ce que** la saillie (34) s'étend dans une direction conique à partir d'une partie intérieure dans le plan radial et extérieure dans le plan axial de la garniture (32).

5. Ensemble roulement de moyeu étanche selon l'une quelconque des revendications précédentes, **caractérisé en ce que** la garniture (32) comprend en outre :
au moins une lèvre (33) située vers l'extérieur dans le plan radial pour coulisser contre ladite paroi cylindrique (22) intérieure ; et
au moins une partie élastique (46, 47) formée sur au moins un côté de la garniture parmi un côté intérieur dans le plan radial et un côté extérieur dans le plan axial.

6. Ensemble roulement de moyeu étanche selon la revendication 5, **caractérisé en ce qu'**il comprend en outre trois lèvres (33) s'étendant vers l'extérieur dans le plan radial reliées dans le plan radial sur l'extérieur par une surface cylindrique (33s) commune placée en contact coulissant avec ladite paroi cylindrique (22) intérieure et comportant trois longueurs radiales différentes.

7. Ensemble roulement de moyeu étanche selon l'une quelconque des revendications précédentes, **caractérisé en ce que** le dispositif d'étanchéité (20) comprend un joint en labyrinthe (50) placé devant la garniture annulaire (32) dans le plan axial et fixé dans la paroi cylindrique (22) intérieure.

8. Ensemble roulement de moyeu étanche selon la revendication 7, **caractérisé en ce que** le joint en labyrinthe (50) comprend un élément de fixation (51) plié fixé dans la paroi cylindrique (22) intérieure et un flasque (52) faisant partie intégrante de l'élément de fixation (51) et faisant face à la garniture annulaire (32).
